# EUROPEAN PATENT APPLICATION

(11) **EP 4 636 557 A1**
(43) Date of publication of application: **22.10.2025**
(21) Application number: 24741663.9
(22) Date of filing: 09.01.2024
(51) Int. Cl.: G06F 3/04842, G06F 3/0481, G06F 3/04883

(54) **ELECTRONIC DEVICE FOR PROVIDING APPLICATION LIST, OPERATION METHOD THEREOF, AND STORAGE MEDIUM**

(30) Priority: 09.01.2023 KR 20230002633; 06.02.2023 KR 20230015747
(71) Applicant: Samsung Electronics Co., Ltd., Suwon-si, Gyeonggi-do 16677 (KR)
(72) Inventor: LEE, Bona, Suwon-si, Gyeonggi-do 16677 (KR); HUH, Eunjung, Suwon-si, Gyeonggi-do 16677 (KR); KANG, Doosuk, Suwon-si, Gyeonggi-do 16677 (KR); KIM, Suhyun, Suwon-si, Gyeonggi-do 16677 (KR)
(74) Representative: Walaski, Jan Filip
(86) International application number: PCT/KR2024/000381
(87) International publication number: WO 2024/151042

(57) **Abstract**

According to an embodiment, electronic devices (101, 201) may comprise displays (160, 360) and one or more processors (120, 360). According to an embodiment, the one or more processors may be set to obtain information about at least one external device associated with a user account of the electronic device. According to an embodiment, the one or more processors may be set to generate at least one page related to a function being executed in the electronic device and at least one page associated with the at least one external device on the basis of the obtained information. According to an embodiment, the one or more processors may be set to display at least one of the generated pages on the displays on the basis of an input for displaying an application list.

## Description

### [Technical Field]

An embodiment of the disclosure relates to an electronic device for providing an application list, a method of operating the same, and a storage medium.

### [Background Art]

Various services and additional functions provided through a user terminal, for example, an electronic device such as a smartphone, are gradually increasing. In order to increase effective value of the electronic device and meet various user demands, communication service providers or electronic device manufacturers are competitively developing electronic devices providing various functions. Accordingly, types of applications executable in the electronic device have been diversified.

Applications installed in the electronic device may be selectively executed according to user preference, and multi-tasking for simultaneously executing a plurality of applications is possible. During the multi-tasking, application switching may be performed between the foreground and the background. The foreground may be an environment in which a higher-priority application is executed, and the background is an environment in which a lower-priority application is not executed. Further, in order to easily search for an application, the electronic device provides a list of recently executed applications (recent application list).

As described above, it may be required to provide a user interface for easily searching applications being executed to maximize the convenience of users in the multi-tasking environment. From a user's perspective, the user may desire to receive a user interface that can conveniently and intuitively control applications being executed.

### [Detailed Description of the Invention]

### [Technical Solution]

According to an embodiment, an electronic device 101 or 201 may include a display 160 or 360, at least one processor 120 or 360, and memory 130 or 330 configured to store instructions. According to an embodiment, the instructions may be configured to, when executed by the at least one processor, cause the electronic device to obtain information on at least one external device associated with a user account of the electronic device.

According to an embodiment, the instructions may be configured to cause the electronic device to generate at least one page related to a function being executed in the electronic device and at least one page associated with the at least one external device, based on the obtained information.

According to an embodiment, the instructions may be configured to cause the electronic device to display at least one page among the generated pages on the display, based on an input for displaying an application list.

According to an embodiment, a method of providing an application list by an electronic device 101 or 201 may include obtaining information on at least one external device associated with a user account of the electronic device. According to an embodiment, the method may include generating at least one page associated with a function being executed in the electronic device and at least one page associated with the at least one external device. According to an embodiment, the method may include displaying at least one page among the generated pages, based on an input for displaying an application list.

According to an embodiment, a nonvolatile storage medium storing instructions are configured to, when executed by at least one processor 120 or 320 of an electronic device 101 or 201, cause the electronic device to perform at least one operation, the at least one operation including obtaining information on at least one external device associated with a user account of the electronic device. According to an embodiment, the at least one operation may include generating at least one page associated with a function being executed in the electronic device and at least one page associated with the at least one external device, based on the obtained information. According to an embodiment, the at least one operation may include displaying at least one page among the generated pages, based on an input for displaying an application list.

### [Brief Description of Drawings]

FIG. 1 is a block diagram of an electronic device within a network environment according to an embodiment.
FIG. 2 is a diagram illustrating a system configuration in an IoT environment for controlling external devices associated with a user account of the electronic device according to an embodiment.
FIG. 3 is an internal block diagram of the electronic device according to an embodiment.
FIG. 4 is a flowchart illustrating the operation of the electronic device for providing an application list according to an embodiment.
FIG. 5 is a flowchart illustrating a method of obtaining information on external devices associated with a user account of the electronic device according to an embodiment.
FIG. 6 illustrates an example of screens showing pages of applications executed in the electronic device and/or external devices according to an embodiment.
FIG. 7A illustrates an example of screens for controlling an external device associated with the user account of the electronic device according to an embodiment.
FIG. 7B illustrates an example of screens in the electronic device and/or the external device according to the control of the external device by the electronic device according to an embodiment.
FIG. 8A illustrates an example of screens showing pages for tasks to be executed in the external device according to an embodiment.
FIG. 8B illustrates an example of screens when the reservation time of the tasks arrives in the external device according to an embodiment.
FIG. 9A illustrates an example of screens before reservation functions of tasks to be executed in the external device are turned off according to an embodiment.
FIG. 9B illustrates an example of screens after reservation functions of tasks to be executed in the external device are turned off according to an embodiment.
FIG. 10 illustrates an example of screens showing pages of which display ratios are changed based on the execution time of an application executed in each of the electronic device and/or the external device according to an embodiment.
FIG. 11 illustrates an example of screens showing pages of which display ratios are changed according to the distance from the electronic device according to an embodiment.
FIG. 12 illustrates an example of describing a user setting for selecting at least one external device from a list of external devices according to an embodiment.
FIG. 13 is a flowchart illustrating signal transmission and reception between the electronic device, the external device, and the server for executing reservation functions according to an embodiment.
FIG. 14 illustrates an example of screens showing pages of which arrangement is determined based on an orientation from the electronic device according to an embodiment.
FIG. 15 illustrates an example of screens showing pages in the case where the external device is in an inactive state according to an embodiment.
FIG. 16 illustrates an example of screens showing different numbers of pages, based on the distance from the electronic device according to an embodiment.
FIG. 17 illustrates an example of a page display scheme in the case where the same application is installed in the electronic device and the external device according to an embodiment.
FIG. 18 illustrates an example of screens showing pages including information scheduled to be executed in the electronic device according to an embodiment.

In connection with a description of drawings, the same or similar reference numerals may be used for the same or similar elements.

### [Mode for Carrying out the Invention]

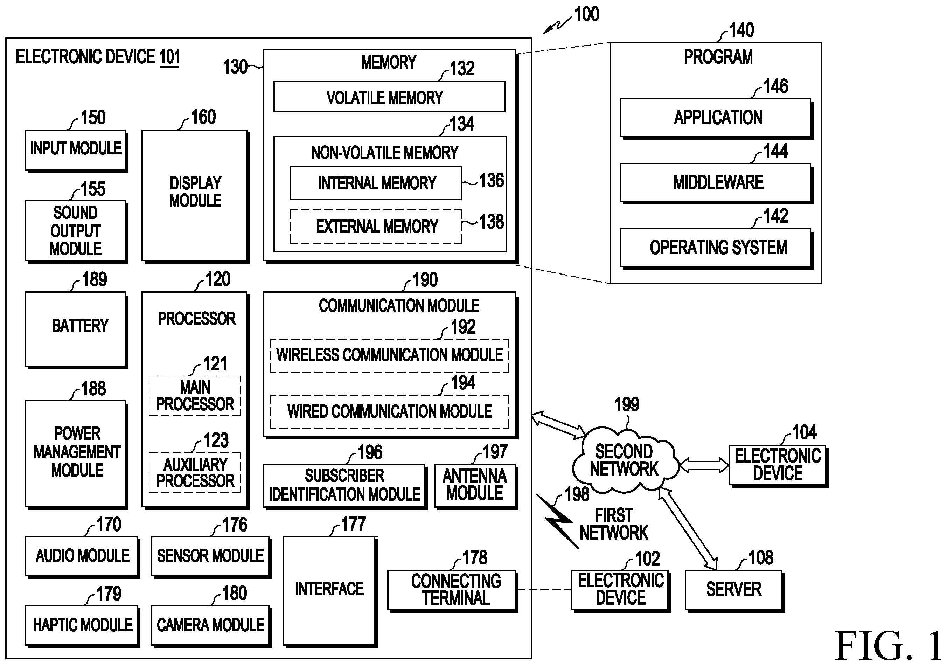

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, the same reference numeral may be assigned to elements that can be easily understood through prior embodiments or may be omitted, and detailed description thereof may also be omitted. The electronic device 101 according to an embodiment of the disclosure may be implemented through a selective combination of configurations of different embodiments, and a configuration in one embodiment may be replaced with a configuration of another embodiment. For example, it should be noted that the disclosure is not limited to specific drawings or embodiments.

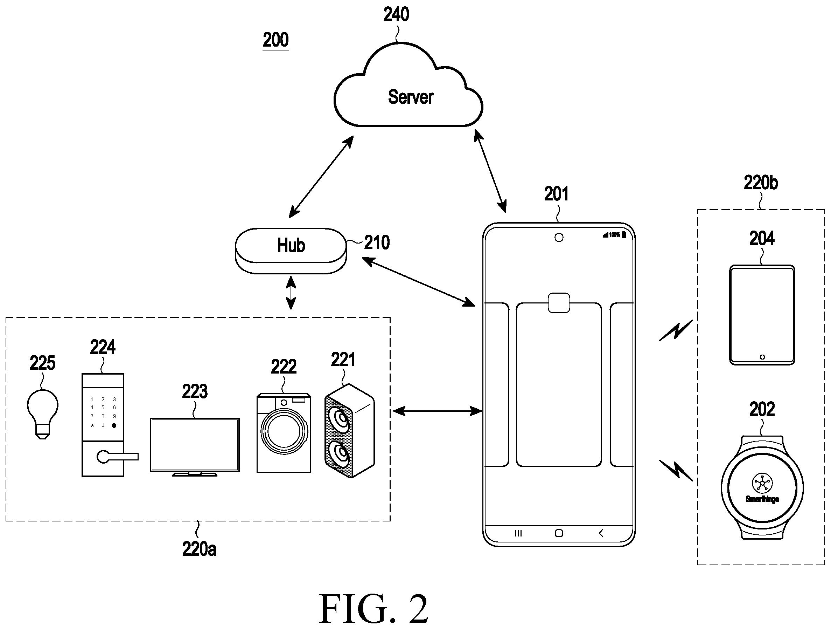

FIG. 2 is a diagram illustrating a system configuration in an IoT environment for controlling external devices associated with a user account of an electronic device according to an embodiment. An electronic device 201 in FIG. 2 may be the electronic device 101 of FIG. 1. Further, the electronic device 201 in FIG. 2 may have the same configuration as the electronic device 101 of FIG. 1.

In the case of a smart home environment, Internet of things (IoT)-based various services may be provided using IoT devices, and the electronic device 201 may execute an application for managing each of the IoT devices. Further, the electronic device 201 may control various external devices that can be linked to the electronic device 201, for example, another electronic device (for example, a smartphone or a tablet PC) or a wearable electronic device (for example, a smart watch) of the same user as well as the IoT devices.

As described above, as types of external devices that can be controlled by the electronic device 201 and executable applications become more diverse, the electronic device 201 may perform multi-tasking for simultaneously executing a plurality of applications. The electronic device 201 may provide a list of applications being executed in response to a user input such as a key input for identifying a list of the applications being executed during the multi-tasking. The application list may include applications being executed in the foreground and application of which execution is temporarily paused in the background among the applications installed in the electronic device 201. The electronic device 201 may operate a plurality of pages to display the application list. However, the plurality of pages reflects only the execution state of the applications installed in the electronic device 201.

Accordingly, it is required to provide a user interface for identifying external devices that can be linked to the electronic device 201 and easily identifying applications being executed in each of the electronic device 201 and the external devices.

In an embodiment, an electronic device for providing an application list, a method of operating the same, and a storage medium may be provided to easily detect not only a list of applications being executed in the electronic device 201 but also the operation state in external devices that can be linked thereto. The electronic device 201 may provide an integrated user interface for identifying and controlling applications being executed in the external device that can be linked to the electronic device 201, thereby increasing user convenience.

Referring to FIG. 2, a system 200 for providing the application list may include the electronic device 201, at least one server 240, and at least one external device 220a and 220b. According to an embodiment, when the electronic device 201 can operate through direct communication, for example, device to device (D2D) communication without passing through the external devices 220a and 220b, and the server 240 having the same user account, the server 240 can be omitted. The electronic device 201 and the external devices 220a and 220b may be devices operating based on a user account to be mutually linked. The electronic device 201 may identify the external devices 220a and 220b, based on the user account and obtain information on the external devices 220a and 220b associated with the user account. For example, the electronic device 201 may obtain, through the server 240, information on the first external device 220a among the external devices 220a and 220b associated with the user account. Further, the electronic device 201 may obtain, through a link with the second external device 220b, information on the second external device 220b among the external devices 220a and 220b associated with the user account. The information on each of the external devices 220a and 220b may include identification information of each of the external devices 220a and 220b, applications executed in each of the external devices 220a and 220b, or information on tasks scheduled to be executed. Accordingly, the electronic device 201 may provide a list of applications executed in each of the external devices 220a and 220b, based on the obtained information.

A list related to applications executed in the electronic device 201 and each of the external devices 220a and 220b may be provided through an integrated user interface. Through the content displayed on the integrated user interface, the user of the electronic device 201 may identify the content of the operation performed in the plurality of external devices 220a and 220b and control the operation of each of the external devices 220a and 220b.

According to an embodiment, the server 240 may be connected to at least some of the plurality of external devices 220a and 220b to support a service that allows the user of the electronic device 201, who wish to control the external devices 220a and 220b to log in the user account using the electronic device 201 to use.

According to an embodiment, the server 240 may include a server that manages the electronic device and at least one external device associated with the user account. For example, a first server may be an IoT server, and a second server may be a content provider. In addition, the server 240 may further include servers such as cloud servers or application market servers.

For example, when the server 240 includes the IoT server and the plurality of external devices 220a is located in different places (or spaces) within the IoT environment, the electronic device 201 may be connected to communicate with the plurality of external devices 220a but may be connected to communicate therewith through a hub 210.

According to an embodiment, the hub 210 may include a communication unit and may receive data from the plurality of external devices 220a through the communication unit. The hug 210 may be referred to as a hub device, a control device, an access point (AP), a coordinator, a server, or a bridge. For example, the hub 210 may collect data received from the plurality of external devices 220a, and the collected data may be transmitted to the electronic device 201 within home or the remote server 240 (for example, the IoT server). For example, the hub 210 may be configured as a separate device or include an electronic device such as TV or a PC.

According to an embodiment, the plurality of external devices 220a may be located in various spaces and may be connected to communicate with the electronic device 201 through the hub 210. According to an embodiment, the plurality of external devices 220a may include various types of electronic devices or digital devices 221, 222, 223, 224, and 225 operating based on IoT technology such as smart home. For example, at least some of the plurality of external devices 220a may be devices capable of outputting images and/or audio data, and may include an external speaker 221 (for example, a Bluetooth speaker or a sound bar), a home appliance 222, or TV 223 that can be connected to the electronic device 201. In another example, at least some of the plurality of external devices 220a may include a light 225 or a door lock 224 disposed in a specific space. In another example, at least some of the plurality of external devices 220a may include a sensor or a switch for detecting a surrounding environment. The device that cannot perform direct communication among the plurality of external devices 220a may be connected to communicate with the electronic device 201 through another external device connected to the electronic device 201. The plurality of external devices 220a may be referred to as Internet of Things devices or IoT devices.

According to an embodiment, at least some external devices 220b among the plurality of external devices 220a and 220b may be devices capable of executing applications associated with the applications installed in the electronic device 201. At least some external devices 220b may be devices that can be linked to the electronic device 201 such as another electronic device 204 of the user of the electronic device 201 (for example, a smartphone or a tablet PC) or a wearable electronic device 202 (for example, the smart watch).

The plurality of external devices 220a and 220b according to an embodiment is not limited to the above-listed types of devices, and may include any device capable of communicating with the electronic device 201. The electronic device 201 can perform 1:N communication with the plurality of external devices 220a and 220b.

According to an embodiment, the electronic device 201 is a device that can be connected (or linked) to the plurality of external devices 220a and 220b, and may search for the plurality of surrounding external devices 220a and 220b in connection with provision of the application list and establish communication with each of the plurality of external devices 220a and 220b. Accordingly, the electronic device 201 may receive information (or data) on operation states of the plurality of external devices 220a and 220b and generate pages for the plurality of external devices 220a and 220b in response to the received information.

According to an embodiment, when an application is executed in at least some external devices 220b among the plurality of external devices 220a and 220b, the electronic device 201 may display an integrated user interface to display the application being executed in each of the external devices 220b along with a list of applications being executed in the electronic device 201.

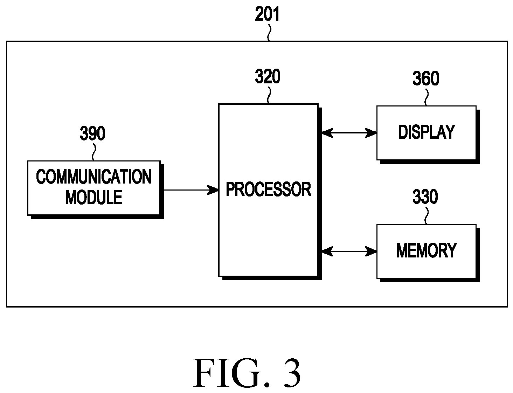

FIG. 3 is a block diagram of the electronic device according to an embodiment.

Referring to FIG. 3, the electronic device 201 may include at least one processor 320, memory 330, a display 360, and/or a communication module 390. All components illustrated in FIG. 3 are not necessary components of the electronic device 21, and the electronic device 201 may be implemented by components larger or fewer than those illustrated in FIG. 3. In describing the electronic device 201 of FIG. 3, detailed description for the configuration that is similar to the embodiment of FIG. 1 or can be easily understood through the embodiment of FIG. 1 may be omitted.

According to an embodiment, the memory 330 (for example, the memory 130 of FIG. 1) may store information for communication with at least one external device among a plurality of external devices and transmitted and received data. According to an embodiment, the memory 330 may store a control program for controlling the electronic device 201, a UI related to an application provided by a manufacturer or downloaded from the outside, and images, user information, documents, databases, or relevant data for providing the UI.

According to an embodiment, the memory 330 may store instructions that, when executed, control the processor 320 to perform various operations. According to an embodiment, the memory 330 may be operatively connected to the communication module 390, the display 360, and the processor 320, and may store instructions that performs control to identify at least one external device which can be linked based on a user interface, identify an operation of applications executed in the electronic device 201 and each of the at least one external device or tasks scheduled to be executed based on information on the at least one identified external device, generate pages corresponding to each of the executed applications or the tasks scheduled to be executed, and display at least one page among the generated pages in response to a user request.

According to an embodiment, the display (or the display) 360 (for example, the display module 160 of FIG. 1) may display a user interface related to an application executed by the user according to the control of the processor 320. For example, according to reception of a user input for displaying a list of the executed applications, applications executed in the electronic device 201 and at least one external device may be displayed through a predetermined display method.

The display 360 may display applications being executed in the external device associated with the user account or tasks scheduled to be executed in a page form in response to the request for displaying the application list. Pages correspond to execution screens of the application, and may be displayed on at least a part of the display 360 or displayed to occupy the entire part of the display 360. The pages may be referred to as a window, a card, a widget, or a display area. Further, the pages indicate screens in which the application is executed, and may include an image such as a thumbnail (or screen shot) of the executed application.

For example, when at least one external device includes a first external device associated with the user account of the electronic device 201, a first page may correspond to an application executed in the electronic device, a second page may correspond to an second application executed in the first external device, and a third page may correspond to a task to be executed in the first external device. Alternatively, when at least one external device includes a first external device and a second external device associated with the user account of the electronic device 201, at least one page associated with the at least one external device may include the second page corresponding to the first application executed in the first external device and the third page corresponding to the task to be executed in the second external device. Accordingly, when the user input for displaying the application list is received, at least some pages of the first page to the third page may be displayed on the display 360. Respective pages may be arranged in the order of execution, and a page different from the first page (for example, a page subsequent to the first page) may be displayed in response to a user input (for example, a swipe gesture) for the first page while the first page is displayed.

For example, in the state where the plurality of pages (for example, the first page to the fourth page) arranged according to the order of execution is output (or displayed, the pages output according to the user input (for example, the swipe input) may vary as follows. Here, outputting some of the plurality of pages may also be referred to as displaying, switching, converting, or replacing. In describing, as an example, the case where a part of the right side on the first page is displayed, the entire part of the second page is displayed, and a part of the left side on the third page is displayed before the user input (for example, the swipe input), a part of the right side on the second page may be displayed, the entire part of the display may be displayed, and a part of the left side on the fourth page may be displayed after the user input (for example, a swipe gesture from the right side to the left side). On the other hand, in the state where the part of the right side on the first page is displayed, the entire part of the second page is displayed, and the part of the left side on the third page is displayed, the entire part of the first page may be displayed and the part of the left side on the second page may be displayed after the user input (for example, the swipe gesture from the left side to the right side). If there is no page subsequent to the first page, the entire part of the first page may be displayed and the part of the left side on the second page may be displayed but, when the first page is continuously connected to the fourth page, the entire part of the first page may be displayed, the part of the right side on the fourth page may be displayed, and the part of the left side on the second page may be displayed.

According to an embodiment, pages displayed in a left direction or a right direction may vary depending on the swipe gesture, and various directions, such as an up direction, a down direction, or a diagonal line may be possible.

According to an embodiment, the display 360 may display objects in order to indicate which external device executes the pages showing execution screens of the application. The corresponding objects may be displayed on at least some of the respective pages. The object is a graphic element related to an external device and may include, for example, an image that represents the external device such as an icon.

According to an embodiment, the communication module 390 may communicate with external devices under the control of the processor 320. According to an embodiment, the communication module 390 may perform communication by using at least one communication scheme among communication schemes including Zigbee, Z-Wave, Wi-Fi, Bluetooth, ultra-wideband (UWB), wireless USB, and near field communication (NFC). For example, the communication module 390 may perform low-power wireless communication by using Zigbee or Z-Wave communication for communication with external devices. According to an embodiment, the communication module 390 may support short-range communication such as Bluetooth or near field communication (NFC) as well as Zigbee or Z-Wave communication.

According to an embodiment, the communication module 390 may be connected to communicate with at least one output device. According to an embodiment, the communication module 390 may be connected to one or more external devices (for example, at least one of the external devices 220a and 220b of FIG. 2) through a 1:1 connection method or a 1:n connection method. Further, the communication module 390 may be wireless connected to an external device through various communication schemes. For example, the communication module 390 may be configured to be connected to an external device by using at least one of LTE communication, Wi-Fi Direct communication, or bidirectional Bluetooth communication. In addition, the communication module 390 may be configured to be connected to an external device by using a cloud-based ID. As described above, the processor 320 may be connected to n external devices through the 1:n connection method supported by the communication module 390, and supportable communication schemes may not be limited thereto.

According to an embodiment, the communication module 390 may operate based on at least one of an ultra-wideband (UWB) communication scheme or a Bluetooth low energy (BLE) communication scheme.

For example, the communication module 390 may include a UWB communication module. The UWB communication module may support UWB communication of the electronic device 201 with the external device. The UWB communication module may measure the distance between the electronic device 201 and the external device through UWB communication. The UWB communication module may measure the orientation of the external device (for example, arrival of angle (AOA)) by using a plurality of antennas.

For example, the processor 320 may calculate the final azimuth based on UWB by using the azimuth relative to the existing azimuth and UWB AOA through a geomagnetic sensor, so as to obtain information related to locations of n external devices. The information related to the locations may be used to identify locations or orientation of the external devices within a predetermined radius or a predetermined place from the electronic device 202.

According to an embodiment, the processor 320 may perform an operation based on at least one communication scheme supported by the electronic device 201. According to an embodiment, the processor 320 may be connected to surrounding external devices through a predetermined communication scheme. For example, the processor 320 may communicate with at least some of the external devices 220a and 220b by using communication of a first scheme and communicate with at least some of the external devices 220a and 220b by using communication of a second scheme. For example, the processor 320 may indirectly communicate with the external device 220a through the hub 210, and each external device 220a may communicate with each other or communicate with the electronic device 201 through an adjacent external device corresponding to an intermediate medium or the hub 210.

According to an embodiment, the processor 320 may obtain information on the external devices 220a and 220b associated with the electronic device 201. To this end, the processor 320 may register in advance the information on the external devices 220a and 220b in the server 240 (for example, an IoT server or a content provider). During an initial registration process, the user may designate a group of external devices which the user desires and stores the same in advance in the server. For example, the processor 320 may monitor, configure, and control operation states of the external devices 220a and 220b registered in the server 240 (for example, the IoT server or the content provider) by using a user account. In response to a request for displaying the application list, the processor 320 may identify at least one target associated with the user account.

The processor 320 may generate a plurality of pages for displaying an application being executed in the identified targets or a task scheduled to be executed. The processor 320 may display at least one of the plurality of pages on the display 360, based on the user input.

According to an embodiment, when the user selects a control item displayed on one page among the displayed pages, the processor 320 may control the external device related to the selected page to perform an operation corresponding to the selected control item. For example, when a content reproduction item is selected, the output (for example, an image and/or audio data) according to the reproduction may be controlled to be performed through the external device of the selected page.

According to an embodiment, the electronic device 101 or 201 may include the display 160 or 360, at least one processor 120 or 360, and the memory 130 or 330 storing instructions. According to an embodiment, the instructions may be configured to, when executed by the at least one processor, cause the electronic device to obtain information on at least one external device associated with a user account of the electronic device. According to an embodiment, the instructions may be configured to cause the electronic device to generate at least one page related to a function being executed in the electronic device and at least one page associated with the at least one external device, based on the obtained information. According to an embodiment, the instructions may be configured to cause the electronic device to display at least one page among the generated pages on the display, based on an input for displaying an application list.

According to an embodiment, at least one page related to the function being executed in the electronic device may include a first page corresponding to at least one application executed in the electronic device.

According to an embodiment, at least one external device may include the first external device and the second external device associated with the user account of the electronic device, and at least one page associated with at least one external device may include a second page corresponding to a first application executed in the first external device and a third page corresponding to a task to be executed in the second external device.

According to an embodiment, the instructions may be configured to cause the electronic device to obtain information on at least one external device associated with the user account of the electronic device through a server or device to device (D2D) communication.

According to an embodiment, the instructions may be configured to cause the electronic device to, based on an input for displaying the application list, display at least some of at least one page among the first page to the third page and at least some of pages adjacent to the at least one page according to the execution order and display an object indicating each of the first external device and the second external device along with the second page and the third page.

According to an embodiment, the instructions may be configured to, while the at least one page among the first page to the third page arranged in the execution order is displayed, cause the electronic device to display at least some of other pages subsequent to the first page to the third page on the display, based on a swipe gesture input.

According to an embodiment, the instructions may be configured to, when the reservation time of a task to be executed in the second external device arrives, case the electronic device to output a notification informing execution of the task and delete the third page.

According to an embodiment, the instructions may be configured to cause the electronic device to identify at least one external device associated with the user account of the electronic device among a plurality of external devices, store a user setting for at least one external device selected from a list of the at least one identified external device, and determine whether to obtain information on at least one external device associated with the user account of the electronic device, based on the user setting.

According to an embodiment, display ratios of at least one page related to a function being executing in the electronic device and/or at least one page associated with the at least one external device may be changed based on an execution time of each of at least one application executed in the electronic device and/or a first application executed in the first external device.

According to an embodiment, the instructions may be configured to cause the electronic device to identify at least one of a distance and/or an orientation of each of the first or second external device from the electronic device, change arrangement of the first page and/or the second page, the number of pages, and/or the display ratio, based on at least one of the identified distance and orientation, and display at least one of the pages of which the arrangement, the number of pages, and the display ratio are changed based on an input for displaying the application list.

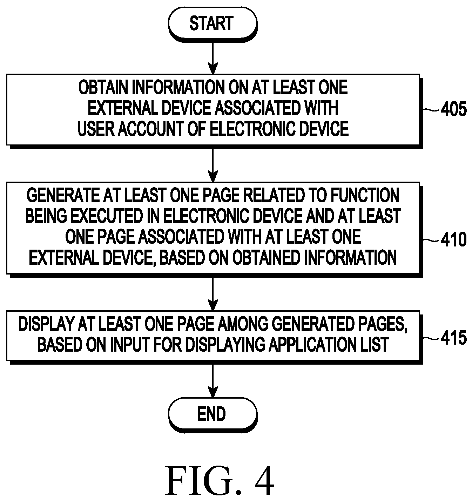

FIG. 4 is a flowchart illustrating the operation of the electronic device for providing an application list according to an embodiment. Referring to FIG. 4, the operation method may include operations 405 to 410. Each operation in the operation method of FIG. 4 may be performed by at least one processor (for example, the processor 120 of FIG. 1 and the processor 320 of FIG. 3) of the electronic device (for example, the electronic device 101 of FIG. 1 and the electronic device 201 of FIGs. 2 and 3). In an embodiment, at least one of operation 405 to operation 410 may be omitted, sequences of some operations may be changed, or another operation may be added.

In operation 405, the electronic device 201 may obtain information on at least one external device associated with a user account of the electronic device 201.

According to an embodiment, the electronic device 201 may obtain information on at least one external device associated with the user account of the electronic device 201 through a server or device to device (D2D) communication.

According to an embodiment, the electronic device 201 may identify at least one external device associated with the user account of the electronic device 201 among a plurality of external devices. The electronic device 201 may store user settings for the external device selected from among the list of at least one external device. The electronic device 201 may determine whether the information on at least one external device associated with the user account of the electronic device is obtained based on the user settings.

For example, the electronic device 201 may identify at least one external device associated with the user account among the plurality of external devices. For example, the user may log in his/her own account by using an ID and password used for the electronic device 201. Further, at least one external device associated with the user account may be a device that logs in the same account by the user using the ID and password used for the electronic device 201. As described above, the electronic device 201 may identify at least one external device having a user account that is the same as the user account in the electronic device 201 among a plurality of external devices.

The electronic device 201 may store a user setting for selecting at least one external device from a list of at least one identified external device. For example, the user setting may indicate that the user designates a target among external devices having the same user account as the electronic device 201 for which the user desires to know the operation state, for example, the application execution state. As described above, the user may designate in advance external devices to be displayed in a recent application list through the user setting.

The electronic device 201 may determine whether to obtain information on at least one external device in the list of at least one identified external device, based on the user setting. When at least one external device includes a first external device and a second external device associated with the user account of the electronic device 201 and the user setting is configured to select both the first external device and the second external device, the electronic device 201 may obtain information on each of the first external device and the second external device. On the other hand, when the user setting is configured to exclude the second external device among the first external device and the second external device, the electronic device 201 may obtain information on the first external device.

In operation 410, the electronic device 201 may generate at least one page associated with a function being executed in the electronic device 201 and at least one page associated with at least one external device, based on the obtained information.

According to an embodiment, at least one page associated with the function being executed in the electronic device 201 may include a first page corresponding to a least one application executed in the electronic device 201.

According to an embodiment, at least one external device may include the first external device and the second external device associated with the user account of the electronic device, and at least one page associated with at least one external device may include a second page corresponding to a first application executed in the first external device and a third page corresponding to a task to be executed in the second external device.

In operation 415, the electronic device 201 may display at least one page among the generated pages, based on an input for displaying an application list.

According to an embodiment, an operation of displaying at least one page among the generated pages may include an operation of displaying at least a portion of at least one page among the first page to the third page and at least a portion of a page adjacent to at least one page in the order of execution, based on an input for displaying the application list.

The second external device and an object indicating each second external device may be displayed along with the second page and the third page. For example, objects may be displayed to show which external device executes each page, and the object may be displayed on the corresponding page or an area adjacent to the page. The object is a graphic element related to the external device and may include, for example, an image that represents the external device such as an icon.

According to an embodiment, the electronic device 201 may display at least some of other pages subsequent to the first page or the third page, based on a swipe gesture input for the at least one page while the at least one page among the first page to the third page arranged in the order of execution is displayed. For example, the electronic device 201 may navigate and display pages according to a movement direction of a user input (for example, a swipe gesture in a left direction or a swipe gesture in a right direction) from the currently displayed page in the state where the at least one page among the first page to the third page is displayed.

According to an embodiment, when a reservation time of the task to be executed in the second external device arrivers, the electronic device 201 may output a notification informing of execution of the task. The electronic device 201 may delete the third page after outputting the notification informing of the execution of the task.

According to an embodiment, a display ratio between at least one page associated with the function being executed in the electronic device 201 and/or the at least one page associated with at least one external device can be changed based on an execution time of each of at least one application executed in the electronic device 201 and/or the first application executed in the first external device.

According to an embodiment, the electronic device 201 may identify at least one of a distance and/or orientation of each of the first or second external device from the electronic device 201. The electronic device 201 may change an arrangement of the first page and/or the second page, the number of pages, and/or a display ratio, based on at least one of the identified distance and/or orientation. The electronic device 201 may display at least one of pages of which the arrangement, the number of pages, and/or the display ratio is changed based on the input for displaying the application list.

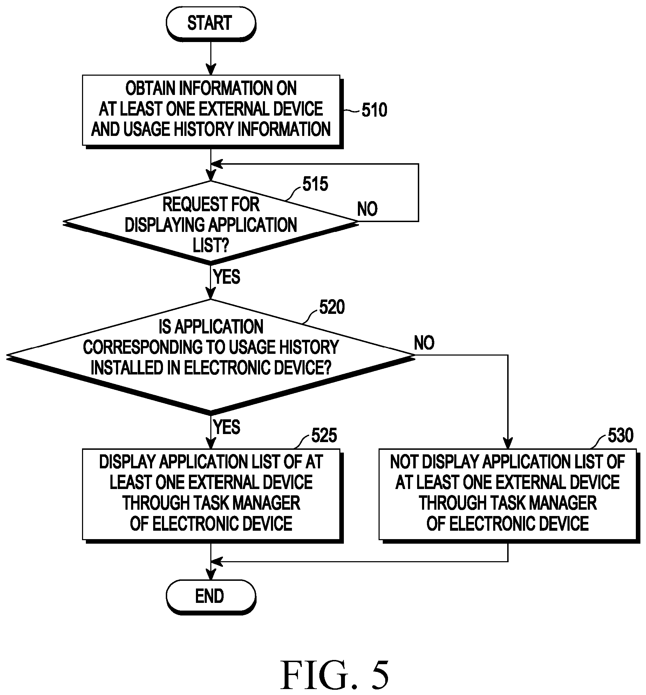

FIG. 5 is a flowchart illustrating a method of obtaining information on external devices associated with a user account of the electronic device according to an embodiment. The operation method of FIG. 5 may include operation 510 to operation 530. In the following embodiment, respective operations may be sequentially performed, but the sequential performance is not necessary. For example, at least one of operation 510 to operation 530 may be omitted, the order of respective operations may be changed, at least two operations may be performed in parallel, or other operations may be added.

Referring to FIG. 5, the electronic device 201 may control at least one external device associated with the user account. For example, the user of the electronic device 201 may use a function provided by at least one external device that logs in the user account and, accordingly, may control at least one external device according to a user input.

Referring to FIG. 5, in operation 510, the electronic device 201 may obtain information on at least one external device and/or usage history information. For example, the information on at least one external device that logs in the user account and the usage history information may be stored in the corresponding external device or the server 204. The electronic device 201 may obtain the information on at least one external device and/or the usage history information through the server 204 or a D2D communication connection. The information on at least one external device and/or the usage history information may include identification information of an external device in which an application was executed, information related to the corresponding application (for example, an application name or a time of use), and information on a task scheduled to be executed (for example, a reserved function). When the information on at least one external device and application usage history information are stored in the server 240, the server 240 may identify which application has been executed in each of at least one external device and how much the application has been executed, and manage the information related to the application (for example, the application name or the time of use).

In operation 515, the electronic device 201 may identify whether a request for displaying an application list is received from the user of the electronic device 201. For example, it may be identified whether a user input for identifying applications being executed in the electronic device 201 and/or each of the external devices is received.

When the request for displaying the application list is received, the electronic device 201 may identify whether an application corresponding to the usage history is installed in the electronic device 201 in operation 520. For example, when a video reproduction application is executed in the first external device, it may be identified whether an application that is associated with or the same as the video reproduction application executed in the first external device is installed in the electronic device 201.

When the application corresponding to the usage history is installed in the electronic device 201, an application list of at least one external device may be displayed through a task manager of the electronic device 201 in operation 525. For example, when there is the application executed in the electronic device 201, pages corresponding to the application list of at least one external device may be added to the page corresponding to the executed application and the pages are displayed. The page corresponding to the application executed in the electronic device 201 may include a page corresponding to each of the application being executed in the foreground and the application of which execution is temporarily stopped in the background.

On the other hand, when the application corresponding to the usage history is not installed in the electronic device 201, the application list of at least one external device may not be displayed through the task manager of the electronic device 201 in operation 530. For example, when there is the application executed in the electronic device 201, the electronic device 201 may display only pages corresponding to the application being executed in the foreground of the electronic device 201 and the application of which execution is temporarily stopped in the background in response to the request for displaying the application list.

Meanwhile, when the application corresponding to the usage history is not installed in the electronic device 201, non-installation of the application may be displayed. Further, after displaying information guiding installation of the corresponding application, the electronic device 101 may display the application list of at least one external device after installing and executing the application when a user selection is made. In addition, even through the application corresponding to the usage history is not installed in the electronic device 201, the electronic device 101 may display the application list of at least one external device after displaying non-installation of the application.

Although the example in which each operation of FIG. 5 is performed by the electronic device 201 has been described, the operation may be performed by the server 240. For example, when the server 204 obtains information on at least one external device and usage history information and receives a request for displaying the application list from the electronic device 201, the server 204 may identify whether the application corresponding to the usage history is installed in the electronic device 201 and control displaying of the application list of at least one external device.

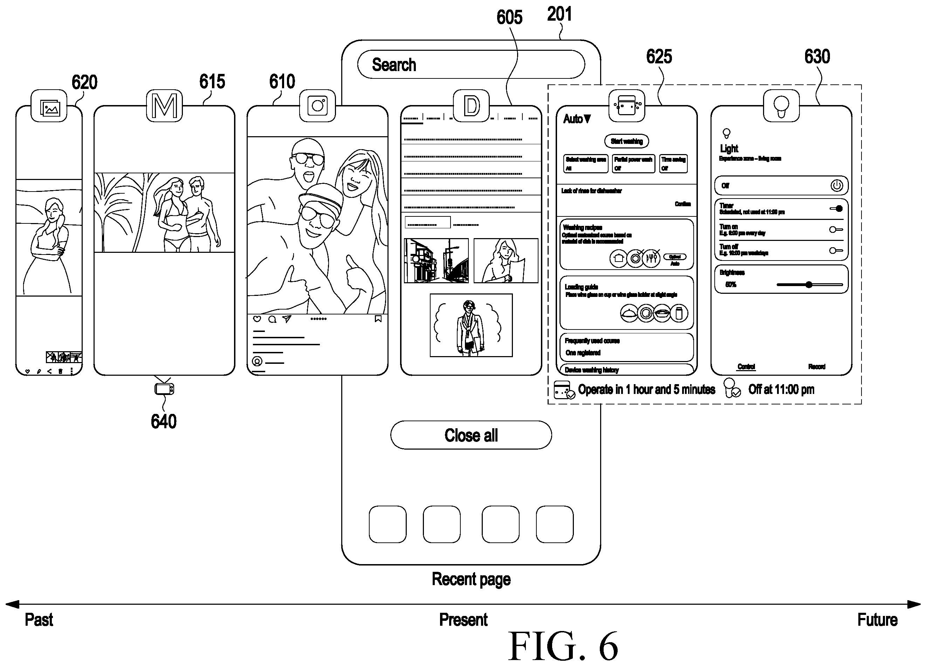

FIG. 6 illustrates examples of screens showing pages of applications executed in the electronic device and/or external devices according to an embodiment.

Referring to FIG. 6, the electronic device 201 may display an application list 605, 610, 615, 620, 625, and 630 in response to detection of a trigger event. The trigger event may be a user input for viewing a recently executed application list. The trigger event may include various types of user input for calling the recently executed application list in an application execution screen or a home screen. For example, the trigger event may include a user input by a predetermined button, and types of user input for calling the recently executed application list, such as a predetermined voice input, are not limited thereto. The application list may be an indication of the recently executed application list in the form of pages (or cards). The application list may include an application that is executed in the foreground but switches to the background in response to a request for displaying the application list, and application of which execution is temporarily stopped in the background for a predetermined time, and/or an application being executed in the background. For example, a music application may be an application being executed in the background.

According to an embodiment, the electronic device 201 may identify applications executed in the external device, based on information on at least one external device associated with the user account of the electronic device 201 in response to the trigger event. The electronic device 201 may configure, in the electronic device 201, an operation state (or usage history) in at least one external device linked to the electronic device 201 together with the application list in the electronic device 201 through an integrated user interface and display the same.

For example, the application currently executed in the foreground of the electronic device 201 may enter the background in response to the request for displaying the application list. When a first page 605 is a page corresponding to the application that enters the background from the foreground, a second page 610 and/or a third page 620 may be pages corresponding to applications in the background of the electronic device 201, for example, applications of which execution was already temporarily stopped or being executed in the background. Further, a fourth page 615 is a page corresponding to an application executed in the external device linked to the electronic device 201 and may be displayed using an object 640 to indicate which external device the application is executed on. The object 640 indicating that the external device is TV may be displayed together with a fourth page 615. The object 640 is displayed adjacent to the fourth page 615, but may be displayed in at least a portion of the fourth page 615. A fifth page 625 is a page corresponding to a task scheduled to be executed in the external device (for example, dishwasher) linked to the electronic device 201, and an object indicating that the linked external device is the dishwasher is displayed. A sixth page 630 is a page corresponding to a task scheduled to be executed in the external device (for example, light) linked to the electronic device 201, and an object indicating that the linked external device is the light is displayed. Meanwhile, FIG. 6 illustrates an example in which the page corresponding to the task scheduled to be executed in the external device is displayed, but a page corresponding to a task scheduled to be executed in the electronic device 201 can be displayed.

According to an embodiment, the first page 605 to the third page 620 corresponding to applications executed in the electronic device 201 may be inserted between the pages 615, 625, and 630 corresponding to respective external devices according to the execution order. Accordingly, in response to the trigger event, the electronic device 201 may arrange and display at least one page among the first page to the sixth page 605, 610, 615, 620, 625, and 630 according to the execution order. At this time, at least some of the pages 610 and 625 adjacent to the first page 605 may be displayed according to the execution order together with at least all or some of the first page 605 on one screen of the electronic device 201. When it is assumed that the first page 605 and/or at least some of the pages 610 and 625 adjacent to the first page 605 is one set, pages (for example, 610, 615, and 620) of the next set may be displayed in response to a user gesture such as a swipe.

In detailed description, in response to detection of the trigger event, the electronic device 201 may display pages of a first set indicating applications of the first set in the application list. For example, the pages of the first set may include the first page 605 and/or at least some of the pages 610 and 625 adjacent to the first page 605. At least one page among the pages of the first set may be configured to display information related to an application execution state in the first external device associated with the user account of the electronic device 201. The electronic device 201 may be configured to display pages of a second set indicating applications of the second set in the application list in response to a user gesture such as a swipe, and a second page among the pages of the second set may be configured to display information related to an application execution state in the second external device associated with the user account.

According to an embodiment, the electronic device 201 may change the currently displayed page to another page according to a predetermined user input such as a swipe gesture and display the changed page in the state where a plurality of pages is sequentially arranged according to the execution order. The predetermined user input may include at least one of a touch input of a predetermined type, a predetermined key input, a predetermined motion gesture, an interaction input of a predetermined type, or a user voice input through a microphone of the electronic device 201. The interaction input of the predetermined type may be detected using a sensor module (for example, the sensor module 176 of FIG. 1) including a 6-axis sensor, and a page may be changed in response to a tilting direction in response to tilting of the electronic device 201 in a desired direction by the user.

A method of changing a page is not limited to the predetermined user input, and it is possible to change the page to another page by providing an object (for example, an arrow icon) for page movement on the currently displayed page and selecting the object by the user. As described above, the method of changing the page may not be limited thereto.

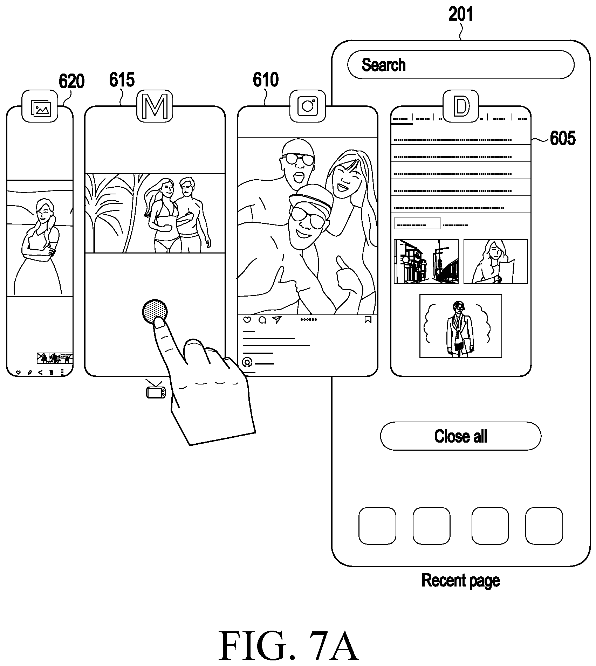

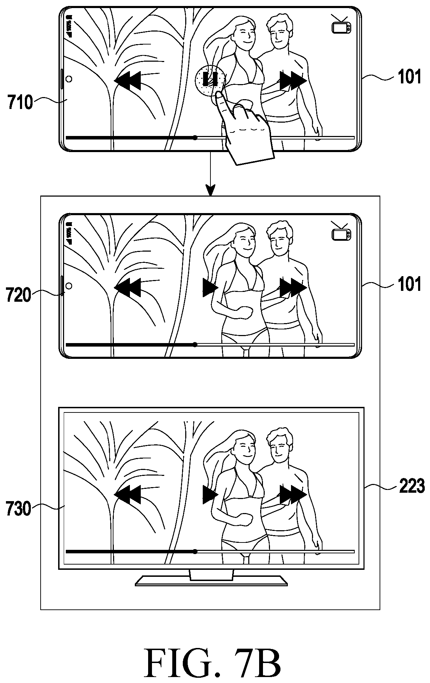

FIG. 7A illustrates an example of a screen for controlling the external device associated with the user account of the electronic device according to an embodiment, and FIG. 7B illustrates an example of a screen in the electronic device and/or the external device according to the control of the external device by the electronic device according to an embodiment. FIG. 7B illustrates the example of the screen subsequent to the operation of FIG. 7A.

Referring to FIG. 7A, in the state where the page 615 on which the object indicating that the external device linked to the electronic device 201 is TV is displayed, the user may control an operation of an application related to the page 615 according to a user input of selecting the page 615 by the user as illustrated in FIG. 7B.

For example, when the page 615 corresponding to the external device (for example, the TV 223 of FIG. 2) of FIG. 7A is selected, the electronic device 201 may display a screen corresponding to an application screen (for example, a video reproduction screen) being executed in the external device to occupy the entire screen as indicated by reference numeral 710. The user may display an application screen being executed in the external device (for example, the TV 223 of FIG. 2) on the screen of the electronic device 201 as indicated by reference numeral 720 according to a user input of selecting an icon (for example, a play button) associated with an operation of the application as indicated by reference numeral 710 of FIG. 7B. The electronic device 201 and the external device (for example, the TV 223 of FIG. 2) may display the same screen, but the application screen being executed may be displayed only in the external device (for example, the TV 223 of FIG. 2). As indicated by reference numeral 730, the operation of the application may be controlled in the external device (for example, the TV 223 of FIG. 2) in response to the user input of the electronic device 201 and, accordingly, the application screen being executed may be displayed. According to the user input of selecting the icon (for example, the play button) associated with the operation of the application, an application screen executed in response to the user input may be displayed in the electronic device 201 and/or the external device (for example, the TV 223 of FIG. 2). For example, the screen displayed in the electronic device 210 and the screen displayed in the external device (for example, the TV 223 of FIG. 2) may be the same as each other, and an object 715 may be used to inform that the electronic device 201 is controlling the external device (for example, the TV 223 of FIG. 2). As described above, the user of the electronic device 201 may control the operation of the application being executed in the external device through the screen of the electronic device 201, not the external device (for example, the TV 223 of FIG. 2).

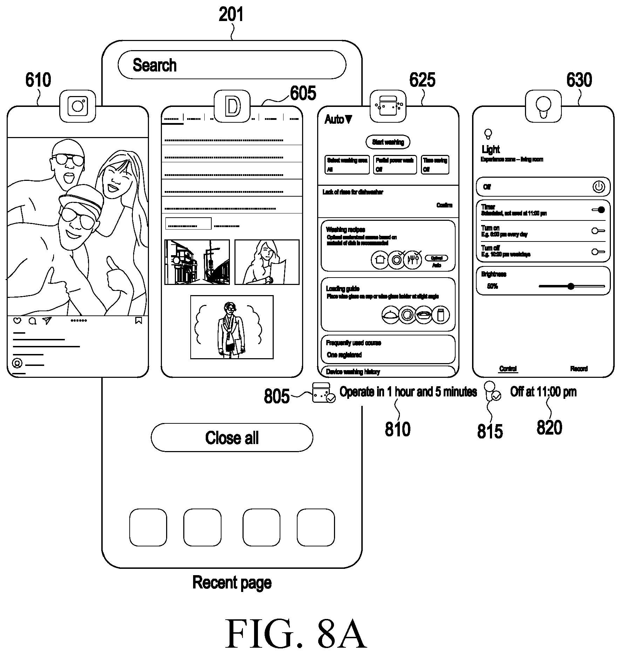

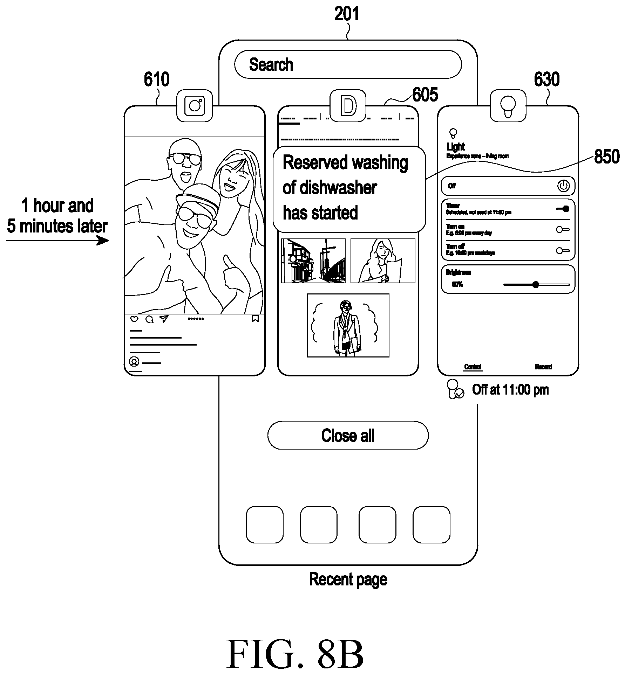

FIG. 8A illustrates an example of a screen showing pages for tasks to be executed in the external device according to an embodiment, and FIG. 8B illustrates an example of a screen when the reservation time of the tasks to be executed in the external device arrives according to an embodiment. FIG. 8B illustrates an example of screens subsequent to the operation of FIG. 8A.

Here, the "tasks to be executed" may be generated by executing an application through the electronic device 201 or the external device by the user in the past and inputting specific information on the executed application by the user. In addition, the "tasks to be executed" may include information configured to output a notification through the electronic device 201 or the external device at a specific future time part.

Referring to FIG. 8A, at least some of the application lists 605, 610, 625, and 630 may correspond to tasks scheduled to be executed in the external device. For example, the page 625 corresponding to the task scheduled to be executed in the external device (for example, the dishwasher) linked to the electronic device 201 shows the case where an object 805 indicating that the linked external device is the dishwasher and/or information on an operation scheduled to be performed (for example, "operate after 1hour and 5 minutes") 810 are displayed. The page 625 may be configured based on a screenshot, a shortcut, or a thumbnail in the case where the user sets a reservation function in connection with the dishwasher.

Further, the page 630 corresponding to the task scheduled to be executed in the external device (for example, the light) linked to the electronic device 201 shows the case where an object 815 indicating that the linked external device is the light and information on an operation scheduled to be performed (for example, "turned off at 11:00") 820 are displayed. The page 630 may be configured based on a screenshot, a shortcut, or a thumbnail in the case where the user sets a reservation function in connected with the light.

As described above, the task scheduled to be executed is the operation of which the reservation time is scheduled to arrive based on the current time, and any task is possible if the reservation time can be input according to a user setting. For example, any function such as an alarm function, a reserved TV channel, and air conditioning and heating reservation is possible if reservation can be set by the user.

Meanwhile, the electronic device 201 may identify whether the reservation time arrives in connection to the task scheduled to be executed in the external device (for example, the dishwasher) linked to the electronic device 201. When the reservation time of the task to be executed arrives, the electronic device 201 may output a notification message 850 informing execution of the task as illustrated in FIG. 8B. Further, the electronic device 201 may delete the page 625 corresponding to the task that has been executed in the external device (for example, the dishwasher) linked to the electronic device 201. Accordingly, when a request for displaying an application list is received after the reservation time passes, the page 625 corresponding to the executed task may be deleted and thus not displayed any more as illustrated in FIG. 8B. On the other hand, the page 630 corresponding to the task which is scheduled to be executed and of which the reservation time does not arrive may be displayed along with another page 610.

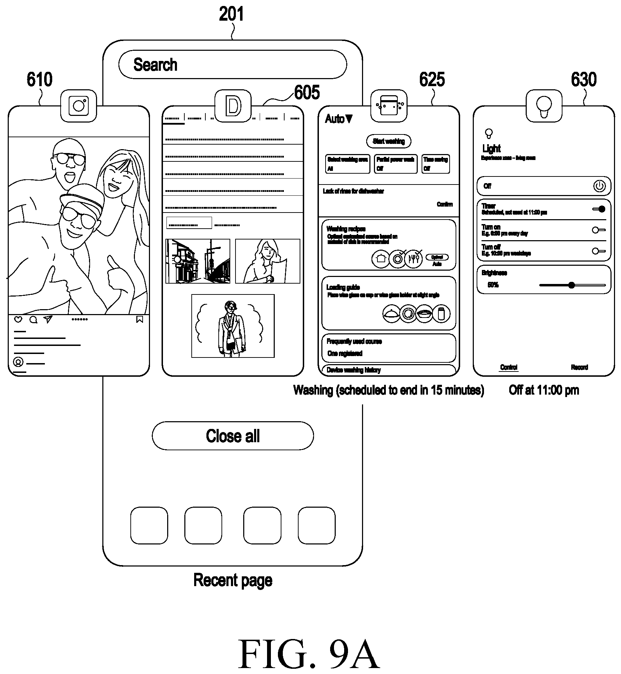

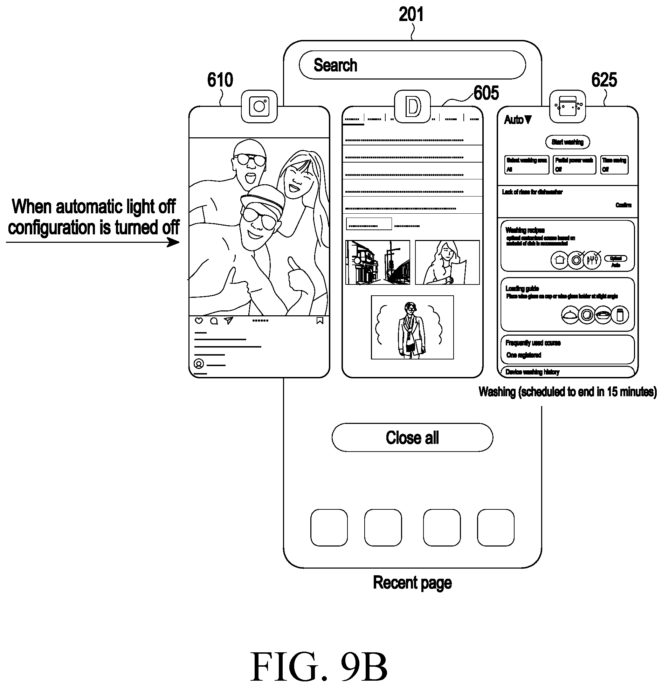

FIG. 9A illustrates an example of screens before a reservation function of the task to be executed in the external device is turned off according to an embodiment, and FIG. 9B illustrates an example of screens after the reservation function of the task to be executed in the external device is turned off according to an embodiment. FIG. 9B illustrates an example of screens subsequent to the operation of FIG. 9A.

Referring to FIG. 9A, the page 625 corresponding to the task scheduled to be executed in the external device (for example, the dishwasher) linked to the electronic device 201 shows the case where information on an operation being performed (for example, "scheduled to end in 15 minutes") is displayed. The page 630 corresponding to the task scheduled to be executed in the external device (for example, the light) linked to the electronic device 201 shows the case where information on an operation scheduled to be performed (for example, "turned off at 11:00 PM) is displayed.

When the user sets an auto-off function of the external device (for example, the light) as off, the page 630 corresponding to the task scheduled to be executed may be deleted in response to a change in the setting of the reservation function as illustrated in FIG. 9B.

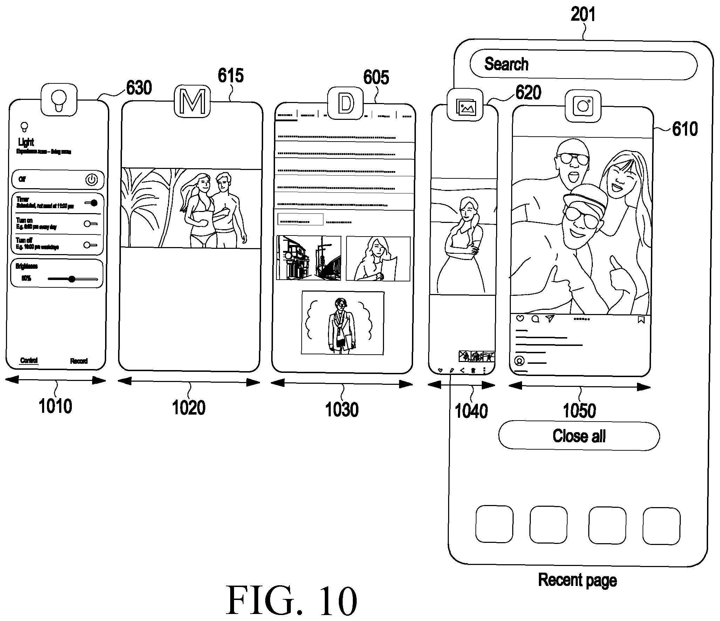

FIG. 10 illustrates an example of screens showing pages of which display ratios are changed based on the execution time of an application executed in each of the electronic device and/or the external device according to an embodiment.

According to an embodiment, display attributes of the pages associated with applications may vary depending on the execution time. For example, display ratios of at least one page related to the function being executed in the electronic device 201 and/or at least page related to at least one external device can be changed based on the execution time of each of at least one application executed in the electronic device and/or a first application executed in a first external device.

FIG. 10 illustrates display attributes of varying the width of the page by reducing the original page, but only a portion of the original page may be cut and types of display attributes that can be controlled such as the page size and the page brightness may be various.

According to an embodiment, the electronic device 201 may identify the execution time of each of the first application executed in the first external device, a second application executed in the second external device, and a third application executed in the electronic device 201. The electronic device 101 may change display ratios of the pages generated in connection with the first to third external devices and/or the electronic device 201, based on the identified execution time. The electronic device 101 may display at least one of the pages of which the display ratios area changed in connection with the first to third external devices and/or the electronic device 201, based on a user input for displaying an application list. As described above, the electronic device 201 may identify the execution time of each application and determine the display ratio corresponding to the execution time of each application.

For example, when the first application is used for a predetermined time (for example, longer than or equal to N hours), the display ratio of the first application, for example, the width of the page corresponding to the first application may be the default width. On the other hand, when the first application is used for the predetermined time or shorter, the display ratio of the first application, for example, the width of the page corresponding to the first application may become narrow in proportion to the time of use.

Referring to FIG. 10, the application used for the predetermined time or longer may be displayed in the form of pages 615, 605, and 610 having the default width 1020, 1030, and 1050. On the other hand, the application used for a time shorter than the predetermined time may be displayed in the form of pages 630 and 620 having widths 1010 and 1040 according to the time of use. For example, when the user uses a social network service app, executes a gallery app to transmit photos, selects a photo, and then returns to the social network service app, the gallery app corresponds to an app for temporarily executing the task and thus may be displayed in the form of a page having a narrow width such as the width of 1040.

As described above, it is possible to easily select a frequently used or mainly used app to increase user convenience during app switching by reducing and displaying a display ratio (for example, the width) of the page corresponding to the temporarily used app.

Meanwhile, although the case where the display ratio (for example, the width) of the page indicating the application is differently displayed according to the time of use of the application has been described above, the display ratio may be differently displayed according to the frequency of the application, and the display ratio of the page may be determined in various ways.

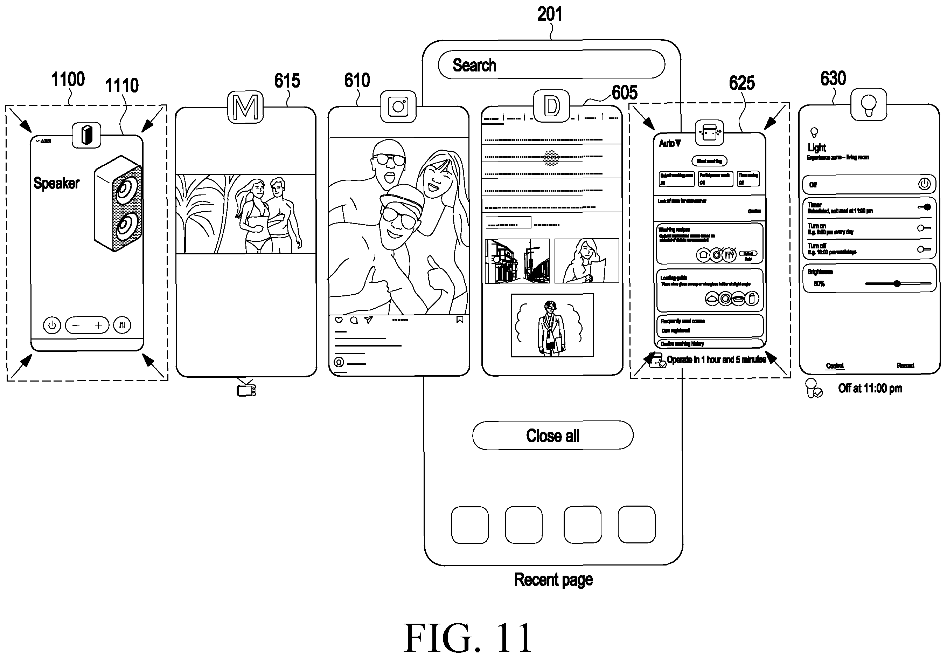

FIG. 11 illustrates an example of screens showing pages of which display ratios are changed according to the distance from the electronic device according to an embodiment.

According to an embodiment, display attributes of pages associated with applications may vary depending on the distance between the electronic device and the external device. For example, FIG. 11 illustrates the case where attributes of pages become different through reduction of original page to a predetermined ratio, but only a portion of the original page may be cut and types of display attributes that can be controlled such as the page size and the page brightness may be various.

According to an embodiment, the electronic device 201 may identify the distance between the electronic device 201 and each of the first or the second external device. The electronic device 201 may generate pages related to the first or second external device, based on the obtained information. The electronic device 201 may change display ratios of the pages generated in connection with the first or second external device, based on the identified distance. The electronic device 201 may display at least one of the pages of which the display ratios are changed in connection with the first or second external device, based on a user input for displaying an application list.

Although FIG. 11 illustrates an example of the case where the distance between the electronic device and each of the first external device or the second external device is identified, the display ratios may be changed based on the orientation of the first external device or the second external device. For example, the electronic device 201 may change arrangement of the pages associated with each of the first external device or the second external device, the number of pages, and/or the display ratio, based on at least one of the identified distance and/or orientation, which will be described below.

Referring to FIG. 11, the display ratio (for example, the size) of each page may be determined in the order of distance closer to the electronic device 201. For example, when the number of external devices linked to the electronic device 201 is plural, a display ratio of an external device having the distance within a predetermined distance of the electronic device 201 from the electronic device 201 may be the default size. On the other hand, when the external device (for example, the dishwasher) is located outside the predetermined distance of the electronic device 201, the form of the page 625 having the size reduced from the original size 1115 may be displayed. Further, the form of the page having a different size may be displayed according to the distance from the electronic device 201. For example, when the external device (for example, a speaker) is spaced farther from the electronic device 201 than the external device (for example, the dishwasher), the size of a page 1110 for the external device (for example, the speaker) may be reduced to be smaller than the original size 1100 and displayed to be smaller than the size of the page 625 for the external device (for example, the dishwasher).

A page for an external device within a predetermined distance (for example, N m) from the electronic device 201 (for example, X axis) may be displayed with the default size. On the other hand, in the case of the external device escaping from the predetermined distance, the size of the corresponding page may be reduced and displayed as if the external device is located far from the electronic device 201 depending on an escaping degree. As described above, it is possible to provide distance information from the external device to the user by visually displaying a different display ratio of a page of each external device according to an external device close to or far from the current location of the electronic device 201.

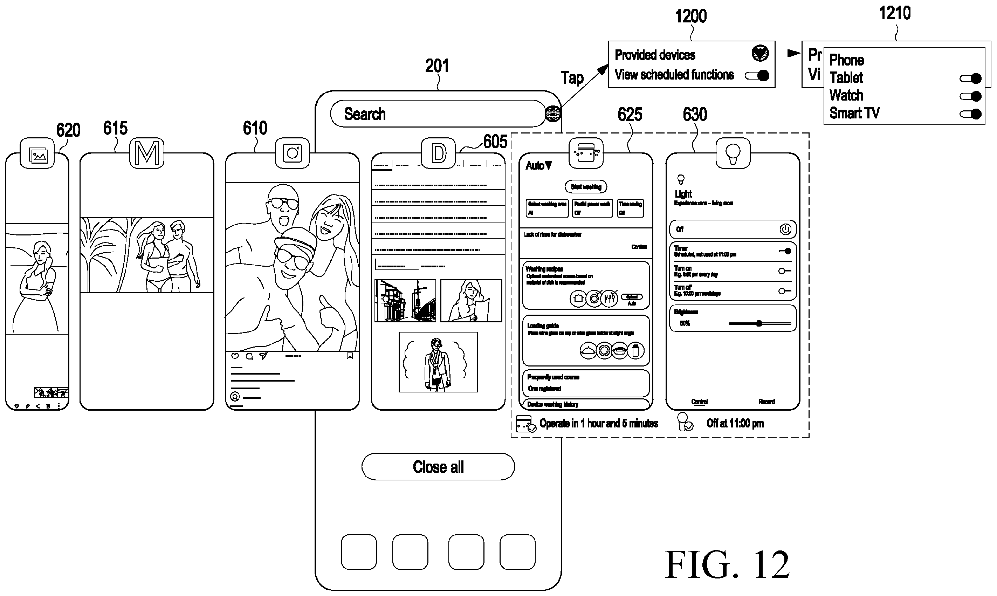

According to an embodiment, although the example in which the application list is displayed in the electronic device 201 has been described, the application list may be displayed in an external device having a large screen linked to the electronic device 201. Further, a target displaying the application list may be selected from among the electronic device 201 and/or external devices which can be linked to the electronic device 201 according to a user selection. For example, the user may select a desired target from devices including a display among the external devices which can be linked. Accordingly, the user may select at least one of a smartphone, a tablet PC, a notebook, a watch, or AR glasses, so as to make a request for viewing the application list through the selected target. Further, the user may set to filter and display applications or tasks that can be supported by each of the electronic device 201 and/or external devices. This will be described in detail with reference to FIG. 12.

FIG. 12 illustrates an example of describing a user setting for selecting at least one external device from a list of external devices according to an embodiment.

As illustrated in FIG. 12, the electronic device 201 may provide items 1200 for configuring linkable external devices and/or configuring operations related to viewing scheduled functions. For example, when the item for the provided devices is selected, a list 1210 of linkable external devices may be displayed. Accordingly, the user may view gathered applications executed in the desired external device or turn on/off the scheduled functions through the configuration function.

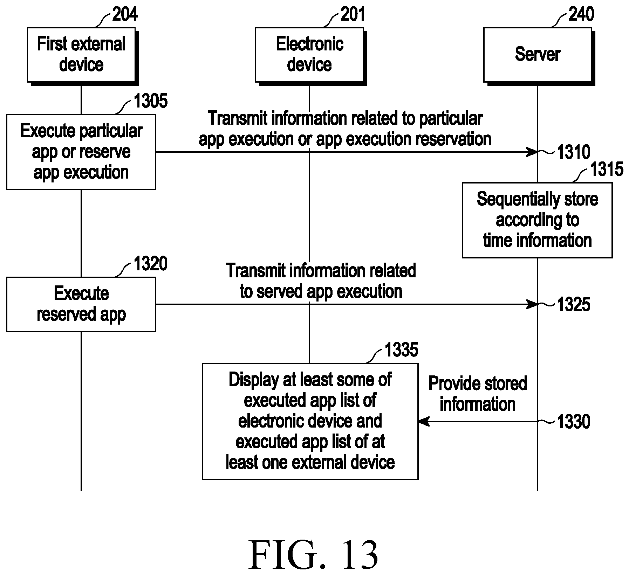

FIG. 13 is a flowchart illustrating signal transmission and reception between the electronic device, the external device, and/or the server for executing the reservation function according to an embodiment. In FIG. 13, an operation according to the reservation function of the first external device 204 among the external devices 220a and 220b of FIG. 2 is described as an example.

In FIG. 13, the server 240 is illustrated as an element that serves to transmit information related to execution of an app in each external device, but the storage role of the server 240 may be performed by an external storage separately configured from the electronic device 201.

Referring to FIG. 13, as a particular app is executed or the app execution is reserved by a user setting in operation 1305, the first external device 204 may transfer information related to the execution of the particular app in the first external device 204 or the reservation of the app execution to the server 240 in operation 1310. As the server 204 receives the information on the execution of the particular app in the first external device 204 or the reservation of the app execution, the server 204 may store the information. The information stored in the server 240 is information required for displaying the application list and may include screen summarization information, app information, or information such as the execution time.

When receiving and storing the information on the execution of the particular app or the reservation of the app execution, the server 240 may sequentially store the information according to time information in operation 1315. Thereafter, according to the execution of the reserved app in the first external device 204 in operation 1320, information on the execution of the reserved app in the first external device 204 may be transferred to the server 240 in operation 1325. The server 204 may store the information on the execution of the reserved app in the first external device 204, and the server 240 may provide the stored information to the electronic device 201 in operation 1330. According to an embodiment, the electronic device 201 may load the stored information from the server 240 in response to a request for displaying the application list in the electronic device 201 or may receive the stored information through a push notification to the registered electronic device 201 and/or external devices when an update is generated by the server 240. Based on acquisition of the stored information, the electronic device 201 may display the list of executed apps of the electronic device and at least some of the list of executed apps of at least one external device in operation 1335. For example, the list of executed apps of at least one external device may include information according to execution of reserved apps.

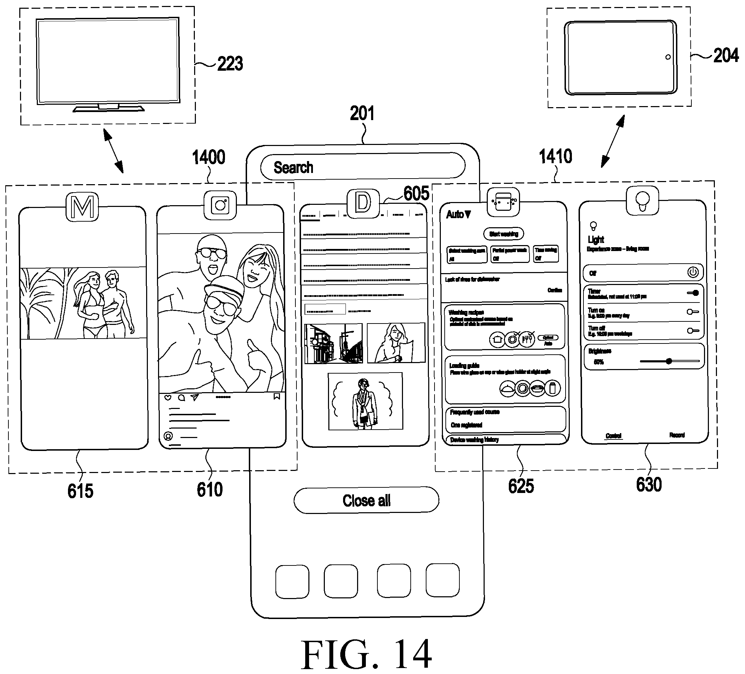

FIG. 14 illustrates an example of screens showing pages of which arrangement is determined based on an orientation from the electronic device according to an embodiment.

According to an embodiment, the electronic device 201 may identify an orientation of the first or second external device from the electronic device 201. The electronic device 201 may generate pages related to the first or second external device, based on the obtained information. The electronic device 201 may change arrangement of the pages generated in connection with the first or second external device, based on the identified orientation. The electronic device 201 may display at least one of the pages of which arrangement is changed in connection with the first or second external device, based on a user input for displaying the application list. According to an embodiment, the electronic device 201 may display pages related to the first external device or the second external device, for example, only one page and, when the user selects on page, may display several pages of the corresponding external device in response to the selection. For example, based on the user input for displaying the application list, the electronic device 201 may display information indicating the first external device or the second external device and, when the object is selected, may load and display pages of the external device corresponding to the selected object. Referring to FIG. 14, the electronic device 201 may configure pages 1410 related to the first external device 204 to be arranged on the right side in accordance with identification that the first external device 204 is located on the right side of the electronic device 201. On the other hand, in accordance with identification that the second external device 223 is located on the left side, the electronic device 201 may configure pages 1400 related to the second eternal device 223 on the left side.

For example, the electronic device 201 is connected to directly communicate with the first external device 204 and/or the second external device 223 or may be connected to communicate through another external device (for example, the hub 210) connected to the electronic device 201.. In accordance with the user input for displaying the application list, the electronic device 201 may identify an orientation of each of the first external device 204 or the second external device 223, based on the electronic device 201. For example, the electronic device 201 may identify at least one of the distance and/or orientation of the external device from the electronic device 201, based on various communication schemes such as short range communication (for example, Wi-Fi or Bluetooth) as well as a UWB communication scheme. The electronic device 201 may obtain information on each of the first external device 204 and/or the second external device 223, for example, identification information and information related to application execution. Based on at least one of the identified distance and/or orientation, the electronic device 201 may display an integrated user interface for arranging the corresponding page to correspond to the orientation of each of the first external device 204 and/or the second external device 223.

As described above, it is possible to increase user convenience by arranging and displaying the corresponding pages in a direction corresponding to the orientation of each of the first external device 204 and/or the second external device 223.

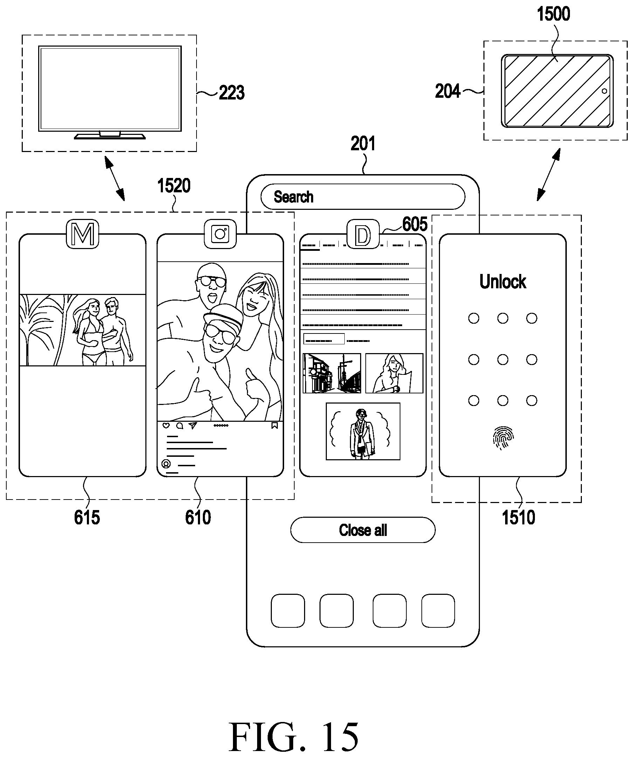

FIG. 15 illustrates an example of screens showing pages in the case where the external device is in an inactive state according to an embodiment.

FIG. 15 illustrates the case where the first external device 204 is in an inactive state 1500 in which the screen is turned off and the second external device 223 is in an active state in which the screen is turned on. In the case of the active state in which the screen of the second external device 223 is turned on, pages 1520 related to the second external device 223 may be pages corresponding to applications executed in the second external device 2230. On the other hand, in the case of the inactive state 1500 in which the screen of the first external device 204 is turned off, the page1510 related to the first external device 204 may include a screen related to unlocking or information related to wake-up. Further, the page 1510 related to the first external device 204 may be displayed to be the same as a lock screen of the first external device 204.

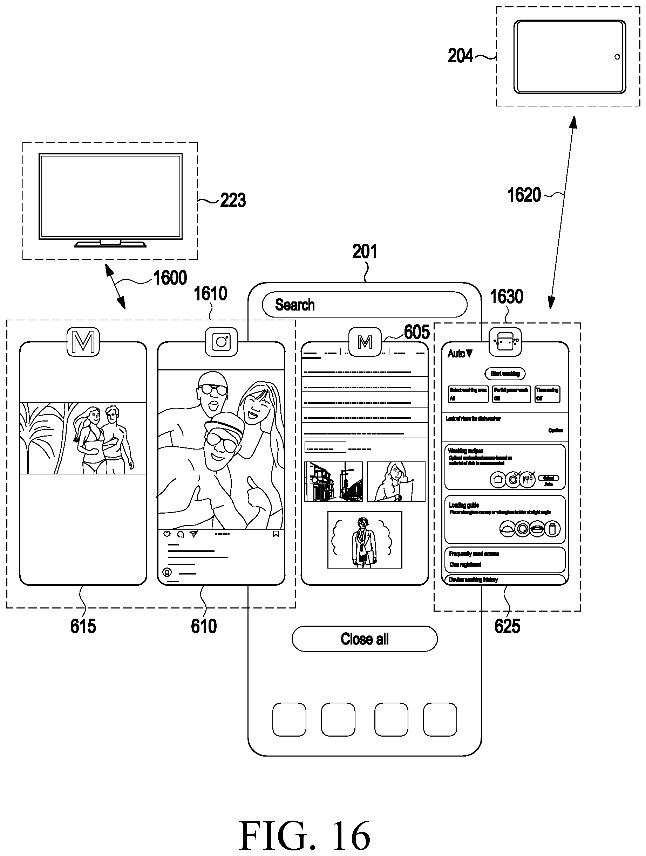

FIG. 16 illustrates an example of screens showing different numbers of pages, based on the distance from the electronic device according to an embodiment.

According to an embodiment, the electronic device 201 may identify the distance between the electronic device 201 and each of the first or the second external device. The electronic device 201 may generate pages related to the first or second external device corresponding to the determined number according to the identified distance, based on the obtained information. The electronic device 201 may display at least one of the pages generated in connection with the first or second external device, based on a user input for displaying an application list.

Referring to FIG. 16, when a distance 1600 between the electronic device 201 and the second external device 223 is shorter than a distance 1620 between the electronic device 201 and the first external device 204, a page 1610 corresponding to the second external device 223 may be more frequently displayed than a page 1630 for the first external device 204. As described above, according to the distance from the electronic device 201, the number of pages that can be displayed in connection with the external device may be differently determined. When an application executed in the first external device 204 is a music application even though the distance from the first external device 204 is longer than or equal to a predetermined distance, the music application may have a higher priority than another application executed in the first external device 204. For example, when the number of pages that should be displayed by one page is changed in the state where two pages are displayed as the distance from the first external device 204 is equal to or longer than the predetermined distance, a page corresponding to the music application having a higher priority may be continuously displayed.

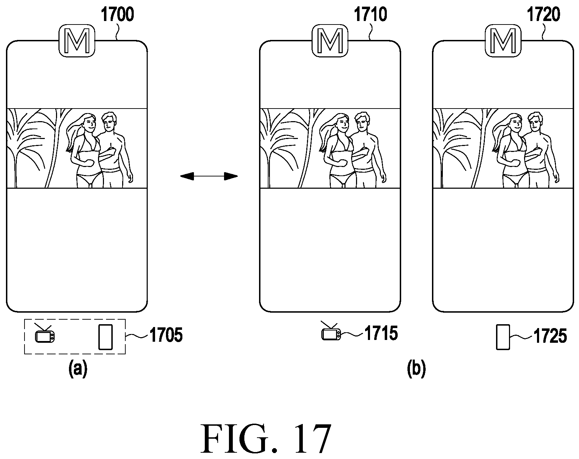

FIG. 17 illustrates an example of a page display scheme in the case where the same application is installed in the electronic device and the external device according to an embodiment.

When the same application is installed in the electronic device 201 and the external device, the electronic device 201 may indicate that the application is an application being executed in each of the electronic device 201 and the external device by using objects 1705 on one page 1700 corresponding to the application as illustrated in part (a) of FIG. 17. According to an embodiment, when the user selects the page 1700, the electronic device 201 may display a user interface (for example, a popup window) for selecting a device to execute the application from among the electronic device 201 and the external device.

Further, as illustrated in part (b) of FIG. 17, even through the same application is executed, a page 1710 corresponding to the external device and a page 1720 corresponding to the electronic device 201 may be separately displayed. When the time at which the application is executed is different, the pages 1710 and 1720 may be arranged and displayed in the order of execution time. At this time, an object 1715 indicating the external device may be displayed on the page 1710 corresponding to the external device. Further, an object 1725 indicating the electronic device 201 may be displayed on the page 1720 corresponding to the electronic device 201.

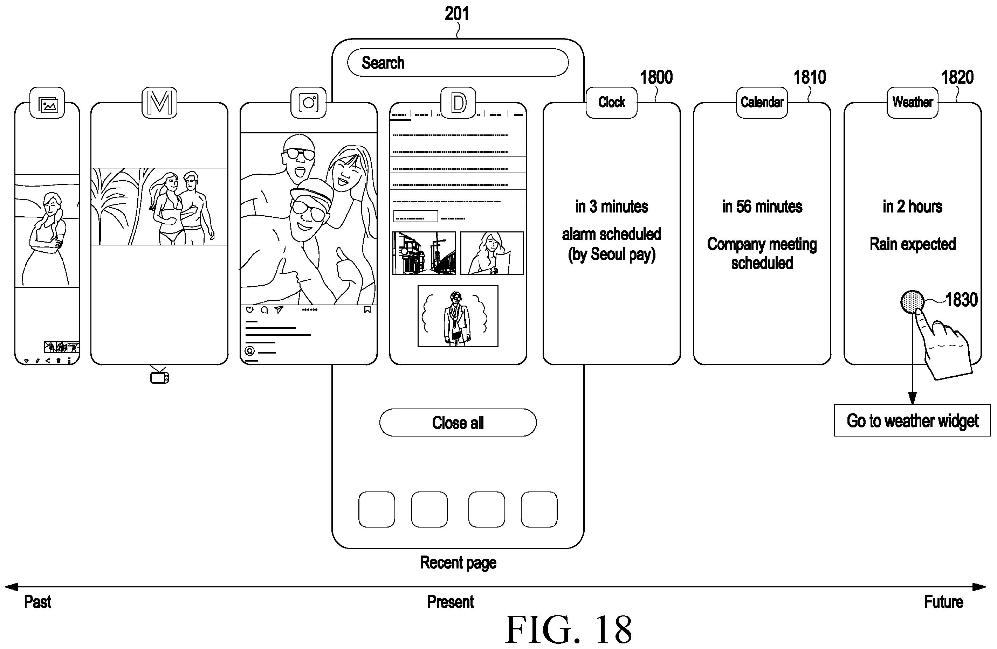

FIG. 18 illustrates an example of screens showing pages including information scheduled to be executed in the electronic device according to an embodiment.

Referring to FIG. 18, pages 1800, 1810, and 1820 related to tasks scheduled to be executed may be displayed in the electronic device 201or the external device according to a user setting. For example, each page 1800, 1810, or 1820 may include an object related to the corresponding task or information scheduled to be executed. For example, in response to selection 1830 for one page 1820 of the pages 1800, 1810, and 1820, the electronic device 201 may switch an application (for example, a weather application) of the selected page 1820 to the foreground. Accordingly, the execution screen of the application may be displayed on the full screen of the electronic device 201.

According to an embodiment, pages corresponding to applications executed in the electronic device 201 and/or the external device or an application list related to tasks scheduled to be executed may be displayed in various ways. For example, the display method of each page may be variously changed according to a user setting as well as the execution order of applications, the distance from the electronic device 201, and the orientation. As described above, as not only the list of applications executed in the electronic device 201 but also applications executed in the external device linked to the electronic device 201 or tasks scheduled to be executed are displayed in the form of an integrated user interface along with the application list, the user can identify and/or control applications being executed in all linkable devices on one screen.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, a nonvolatile storage medium storing instructions are configured to, when executed by at least one processor 120 or 320 of the electronic device 101 or 201, cause the electronic device to perform at least one operation including an operation of obtaining information on at least one external device associated with a user account of the electronic device. According to an embodiment, the at least one operation may include an operation of, based on the obtained information, generating at least one page related to a function being executed in the electronic device and at least one page associated with the at least one external device. According to an embodiment, the at least one operation may include an operation of, based on an input for displaying an application list, displaying at least one page among the generated pages.

## Claims

1. An electronic device (101, 201) comprising:
a display (160, 360);
at least one processor (120, 360); and
memory (130, 330) storing instructions that, when executed by the at least one processor, cause the electronic device to:
obtain information on at least one external device associated with a user account of the electronic device;
generate at least one page related to a function being executed in the electronic device and at least one page associated with the at least one external device, based on the obtained information; and
display at least one page among the generated pages on the display, based on an input for displaying an application list.

2. The electronic device of claim 1, wherein the at least one page associated with the function being executed in the electronic device comprises a first page corresponding to at least one application executed in the electronic device.

3. The electronic device of claim 1 or 2, wherein the at least one external device comprises a first external device and a second external device associated with the user account of the electronic device, and
wherein the at least one page associated with the at least one external device comprises a second page corresponding to a first application executed in the first external device and a third page corresponding to a task to be executed in the second external device.

4. The electronic device of one of claims 1 to 3, wherein the instructions are configured to cause the electronic device to obtain the information on the at least one external device associated with the user account of the electronic device through a server or device to device (D2D) communication.

5. The electronic device of one of claims 1 to 4, wherein the instructions are configured to cause the electronic device to:
display, on the display, at least a portion of at least one page among the first page to the third page and at least a portion of a page adjacent to the at least one page in an order of execution, based on the input for displaying the application list; and
display an object indicating each of the first external device and the second external device, along with the second page and the third page.

6. The electronic device of one of claims 1 to 5, wherein the instructions are configured to cause the electronic device to display at least a portion of other pages subsequent to the first page or the third page on the display, based on a swipe gesture input, while the at least one page among the first page to the third page arranged in the order of execution is displayed.

7. The electronic device of one of claims 1 to 6, wherein the instructions are configured to cause the electronic device to:
in case that a reservation time of the task to be executed in the second external device arrives, output a notification informing of execution of the task; and
delete the third page.

8. The electronic device of one of claims 1 to 7, wherein the instructions are configured to cause the electronic device to:
identify the at least one external device associated to the user account of the electronic device among a plurality of external devices;
store a user setting for at least one external device selected from a list of the identified at least one external device; and
determine whether to obtain the information on the at least one external device associated with the user account of the electronic device, based on the user settings.

9. The electronic device of one of claims 1 to 8, wherein a display ratio between the at least one page associated with the function being executed in the electronic device and/or the at least one page associated with the at least one external device is changeable based on an execution time of each of the at least one application executed in the electronic device and/or the first application executed in the first external device.

10. The electronic device of one of claims 1 to 9, wherein the instructions are configured to cause the electronic device to:
identify at least one of a distance and/or an orientation of each of the first or the second external device with respect to the electronic device;
change an arrangement, a number of pages, and/or a display ratio of the first page and/or the second page, based on at least one of the identified distance and/or orientation; and
display at least one of pages of which the arrangement, the number of pages, and/or the display ratio is changed, based on the input for displaying the application list.

11. A method of providing an application list by an electronic device (101, 201), the method comprising:
obtaining information on at least one external device associated with a user account of the electronic device;
generating at least one page associated with a function being executed in the electronic device and at least one page associated with the at least one external device, based on the obtained information; and
displaying at least one page among the generated pages, based on an input for displaying an application list.

12. The method of claim 11, wherein the at least one page associated with the function being executed in the electronic device comprises a first page corresponding to at least one application executed in the electronic device.

13. The method of claim 11 or 12, wherein the at least one external device comprises a first external device and a second external device associated with the user account of the electronic device, and
wherein the at least one page associated with the at least one external device comprises a second page corresponding to a first application executed in the first external device and a third page corresponding to a task to be executed in the second external device.

14. The method of one of claims 11 to 13, wherein the displaying of the at least one page among the generated pages comprises:
displaying at least a portion of at least one page among the first page to the third page and at least a portion of a page adjacent to the at least one page in an order of execution, based on the input for displaying the application list; and
displaying an object indicating each of the first external device and the second external device, along with the second page and the third page.

15. A nonvolatile storage medium storing instructions configured to, when executed by at least one processor (120, 320) of an electronic device (101, 201), cause the electronic device to perform at least one operation, the at least one operation comprising:
obtaining information on at least one external device associated with a user account of the electronic device;
generating at least one page associated with a function being executed in the electronic device and at least one page associated with the at least one external device, based on the obtained information; and
displaying at least one page among the generated pages, based on an input for displaying an application list.
